# EUROPEAN PATENT APPLICATION

(11) **EP 4 485 952 A1**
(43) Date of publication of application: **01.01.2025**
(21) Application number: 23756307.7
(22) Date of filing: 13.02.2023
(51) Int. Cl.: H04N 21/84, H04N 21/8549

(54) **INFORMATION PROCESSING DEVICE, INFORMATION PROCESSING METHOD, AND PROGRAM**

(30) Priority: 21.02.2022 JP 2022024472
(71) Applicant: Sony Group Corporation, Tokyo 108-0075 (JP)
(72) Inventor: YOKOYAMA, Yuto, Tokyo 108-0075 (JP); OOI, Tomohiro, Tokyo 108-0075 (JP); FUKAZAWA, Ryo, Tokyo 108-0075 (JP); INOUE, Masayuki, Tokyo 108-0075 (JP); ASAYAMA, Kazunori, Tokyo 108-0075 (JP)
(74) Representative: D Young & Co LLP
(86) International application number: PCT/JP2023/004681
(87) International publication number: WO 2023/157782

(57) **Abstract**

An information processing apparatus according to an embodiment includes an acquisition unit that acquires at least one of information related to a user who views free viewpoint content and information related to the free viewpoint content, and a generation unit that generates a viewing time and a viewing position of the free viewpoint content based on the at least one of the information related to the user and the information related to the free viewpoint content.

## Description

### Field

The present disclosure relates to an information processing apparatus, an information processing method, and a program.

### Background

In recent years, three-dimensional video content (hereinafter also referred to as free viewpoint content) in which a viewpoint can be freely changed, such as video content captured by a volumetric video technology and video content capable of viewing the inside of a virtual space such as a 3D game or a metaverse, has been widely spread.

### Citation List

### Patent Literature

Patent Literature 1: JP 2018-182566 A
Patent Literature 2: JP 2012-39550 A
Patent Literature 3: WO 2018/079166 A

### Summary

### Technical Problem

For example, in long free viewpoint content obtained by imaging long events including sports such as soccer and baseball, stages such as dramas and musicals, and musical entertainment such as concerts and open-air festivals, it is difficult for a viewer to know which scene at which time in the content is a highlight. Therefore, there is a problem such as missing a scene worth seeing for the viewer.

Therefore, the present disclosure proposes an information processing apparatus, an information processing method, and a program capable of preventing a viewer from missing a highlight scene.

### Solution to Problem

In order to solve the above problems, an information processing apparatus according to an embodiment includes an acquisition unit that acquires at least one of information related to a user who views free viewpoint content and information related to the free viewpoint content, and a generation unit that generates a viewing time and a viewing position of the free viewpoint content based on the at least one of the information related to the user and the information related to the free viewpoint content.

### Brief Description of Drawings

FIG. 1 is a block diagram illustrating a schematic configuration example of an information processing system according to an embodiment.
FIG. 2 is a functional block diagram illustrating a functional configuration example of the information processing system according to the embodiment.
FIG. 3 is a flowchart illustrating a schematic operation example of the information processing system according to the embodiment.
FIG. 4 is a diagram illustrating an operation flow example when calculating a highlight time according to the embodiment.
FIG. 5 is a diagram illustrating an operation flow example when calculating a highlight position according to the embodiment.
FIG. 6 is a diagram illustrating a calculation example of a positional importance level of event data according to the embodiment.
FIG. 7 is a diagram illustrating a calculation example of a temporal density of the event data according to the embodiment.
FIG. 8 is a diagram illustrating a calculation example of a positional density of the event data according to the embodiment.
FIG. 9 is a diagram illustrating a calculation example of a positional importance level in a viewing importance level according to the embodiment.
FIG. 10 is a diagram illustrating a calculation example of a heat map importance level obtained from a heat map according to the embodiment.
FIG. 11 is a diagram illustrating a calculation example of an importance level obtained from the number of viewers (hereinafter referred to as a viewer count importance level) according to the embodiment.
FIG. 12 is a diagram (part 1) illustrating an example of a flow of determining a highlight viewpoint according to the embodiment.
FIG. 13 is a diagram (part 2) illustrating an example of a flow of determining the highlight viewpoint according to the embodiment.
FIG. 14 is a diagram (part 3) illustrating an example of a flow of determining the highlight viewpoint according to the embodiment.
FIG. 15 is a diagram (part 4) illustrating an example of a flow of determining the highlight viewpoint according to the embodiment.
FIG. 16 is a diagram (part 5) illustrating an example of a flow of determining the highlight viewpoint according to the embodiment.
FIG. 17 is a diagram illustrating an example of a display screen of free viewpoint content according to the embodiment.
FIG. 18 is a hardware configuration diagram illustrating an example of an information processing apparatus that executes various processes according to the present disclosure.

### Description of Embodiments

Hereinafter, an embodiment of the present disclosure will be described with reference to the drawings. In the following embodiment, same parts are given the same reference signs to omit redundant description.

The present disclosure will be described according to the following item order.
0. Introduction
1. Embodiment
1.1 System configuration example
1.2 Functional configuration example
1.3 Operation flow example
1.4 Detailed example of operation flow
1.4.1 Example of event importance calculation flow
1.4.2 Example of motion importance calculation flow
1.4.3 Example of viewing importance calculation flow
1.4.4 Example of highlight information generation flow
1.4.5 Example of highlight viewpoint determination flow
1.5 Usage example of highlight information and highlight viewpoint
1.5.1 Generation of digest video
1.5.2 Suggestion for viewing position (viewpoint position)
1.5.3 Generation of play digest video for coaching
1.5.4 Utilization of meta information
1.6 Summary
1.7 Modification
1.7.1 Modification of importance calculation unit
1.7.2 Modification of combination of highlight information and highlight viewpoint
1.7.3 Modification for remote
1.7.4 Fixing of highlight viewpoint to bird's-eye view
1.7.5 Reduction of 3D motion sickness/video motion sickness
2. Hardware configuration

### 0. Introduction

Free viewpoint content whose viewpoint is freely changeable can be viewed from various viewpoints using a head mounted display (HMD), a personal computer, a smartphone, a tablet terminal, or the like. With respect to the free viewpoint content, it is predicted that, in the future, there will be a demand for viewing some important scenes instead of viewing the entire content, or creating a digest video of the important scenes such as a summary.

Conventionally, for two-dimensional video content, there has been an approach of creating a digest video or the like, but there have been few cases of using long free viewpoint content so far. Therefore, conventionally, creation of a digest video from the free viewpoint content has not been attempted.

In addition, the presence of an element that can be used in two-dimensional content but cannot be used in three-dimensional content due to a change of target content from the two-dimensional content to the three-dimensional content, and an element that can be newly used due to a change to the three-dimensional content has also been an obstacle to creating the digest video from the free viewpoint content.

### (Examples of elements no longer applicable)

· Moving direction of photographing camera · Pixel change in video
· Scene switching

### (Examples of newly applicable elements)

· Movement of viewer's viewpoint
· Viewer's viewing time
· Three-dimensional position information of an object such as a person
· Information on event occurring in content

As described above, it is impossible to generate the digest video from the free viewpoint content by directly using the technology cultivated in the two-dimensional content. For example, since a viewpoint position cannot be freely moved in the two-dimensional content, only a highlight time is estimated in generation of the digest video, and position is not estimated. In addition, it is difficult to accurately estimate a highlight scene (time zone, position, etc.) only by information on motion of an object in the two-dimensional video. Note that the digest video in the present description may be video content having a length shorter than a temporal length of original video content.

On the other hand, in order to extract the highlight scene from the free viewpoint content, it is necessary to perform, in addition to time estimation, estimation of a highlight position and estimation of a viewing position from which direction the estimated position is viewed. In viewing of the free viewpoint content, the viewer operates the viewpoint by its own. Therefore, there is a possibility that the viewer may miss an important scene when the viewer cannot appropriately operate the viewpoint. Accordingly, there may be many users who "do not know where to watch".

Therefore, in the following embodiment, by estimating a highlight time zone, the viewpoint position, and the viewing direction from the free viewpoint content, i.e., estimating the highlight scene, and providing the estimated scene to the viewer, it is possible to prevent the viewer from missing the highlight seen.

### 1. Embodiment

Hereinafter, an information processing apparatus, an information processing method, and a program according to an embodiment of the present disclosure will be described in detail with reference to the drawings.

Free viewpoint content targeted in the present embodiment may be, for example, three-dimensional video content including a motion of an object (human, thing, or the like) captured from a real space into a virtual space using, for example, a volumetric video technology or a HawkEye (registered trademark) system, and three-dimensional video content in which a motion of an object (avatar or thing) is created in a virtual space, such as a 3D game, a metaverse, or avatar animation. However, the present disclosure is not limited thereto, and various types of content can be targeted as long as the position and motion of an object such as a human or a thing are three-dimensionally represented. Note that, for clarity, the following description gives an example of free viewpoint content generated from data photographing sports such as soccer.

Note that the free viewpoint content is roughly divided into two types: "viewing a 360 ° video from the inside of a sphere" and "viewing a 3D model from various directions". These two types are both called the free viewpoint content, but they are greatly different in usage form, creation flow, and the like. The following embodiment exemplifies a case where "viewing a 3D model from various directions" is adopted as the free viewpoint content. However, the present disclosure is not limited thereto, and various types of free viewpoint content such as "viewing a 360 ° video from the inside of a sphere" may be adopted.

Furthermore, the free viewpoint content is not limited to the content generated from the data photographing sports, and the following elements may be included in the free viewpoint content.
· Motion generated by any method (e.g., distinguished motion of a player and a ball)
· Manually or automatically generated event data (e.g., getting a point by player A's kick at coordinate X)
· Meta information such as venue, date, and time

### 1.1 System configuration example

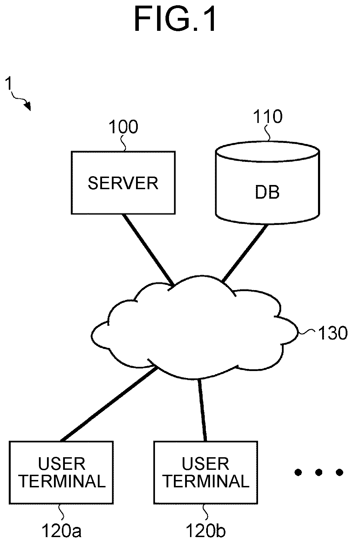

FIG. 1 is a block diagram illustrating a schematic configuration example of an information processing system according to the present embodiment. As illustrated in FIG. 1, an information processing system 1 according to the present embodiment has a configuration in which a server 100, a database (DB) 110, and one or more user terminals 120a, 120b, and so on (hereinafter referred to as user terminal 120 when individual user terminals are not distinguished) are connected via a network 130.

The server 100 is an example of the information processing apparatus according to the present disclosure, and provides a service for viewing free viewpoint content to a user (also referred to as viewer). Note that the server 100 may include one server or a plurality of servers. Furthermore, the server 100 may include one or more cloud servers arranged in the network 130.

In addition to information related to the free viewpoint content such as the free viewpoint content to be provided to the user and meta information of the free viewpoint content, the database 110 also accumulates information related to the user who views the free viewpoint content such as a viewing history collected from the user. Note that the database 110 may be a part of the server 100 or may have a configuration different from the server 100.

The user terminal 120 is, for example, an information processing apparatus for the user to view and use the free viewpoint content provided directly from the database 110 or via the server 100, and may be, for example, an HMD, a personal computer, a smartphone, or a tablet terminal.

The network 130 may be, for example, various networks capable of mutual communication such as a wired or wireless local area network (LAN) (including WiFi), a wide area network (WAN), the Internet, or a mobile communication system (including 4th generation mobile communication system (4G), 4G-long term evolution (LTE), and 5G).

### 1.2 Functional configuration example

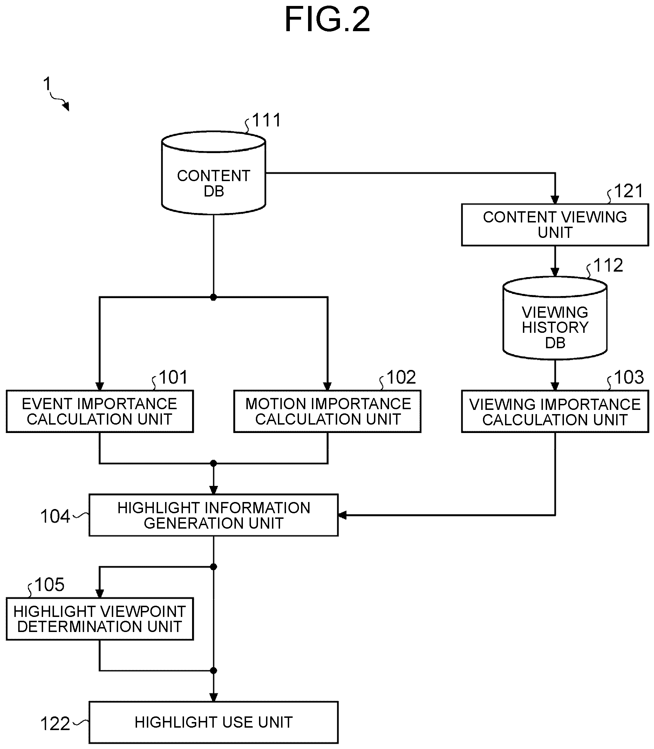

FIG. 2 is a functional block diagram illustrating a functional configuration example of the information processing system according to the present embodiment. As illustrated in FIG. 2, the information processing system 1 includes, as functional elements thereof, an event importance calculation unit 101, a motion importance calculation unit 102, a viewing importance calculation unit 103, a highlight information generation unit 104, a highlight viewpoint determination unit 105, a content database 111, a viewing history database 112, a content viewing unit 121, and a highlight use unit 122.

In the above configuration, for example, the event importance calculation unit 101, the motion importance calculation unit 102, the viewing importance calculation unit 103, the highlight information generation unit 104, and the highlight viewpoint determination unit 105 may be implemented on the server 100, the content database 111 and the viewing history database 112 may be implemented on the database 110, and the content viewing unit 121 and the highlight use unit 122 may be implemented on the user terminal 120.

However, the present disclosure is not limited thereto, and for example, among the event importance calculation unit 101, the motion importance calculation unit 102, the viewing importance calculation unit 103, the highlight information generation unit 104, and the highlight viewpoint determination unit 105, one or more functional elements including the highlight information generation unit 104 and/or the highlight viewpoint determination unit 105 may be implemented on the user terminal 120.

### (Content database 111)

The content database 111 stores the information related to the free viewpoint content, including one or more pieces of the free viewpoint content and meta-event information (also referred to as event data) extracted from each free viewpoint content. The meta-event information (event data) may be a label associated with the free viewpoint content, indicating how the avatar or object is moving at that time. For example, information indicating that a player A is jumping/kicking/scoring at a point X, or a label indicating that an actor B has uttered "Good morning" at a point Y is associated, as the event data, with a time axis of the free viewpoint content.

The event data may be manually or automatically extracted from the free viewpoint content. When the event data is manually extracted, for example, an operator manually creates event data indicating information regarding an event that has occurred in the free viewpoint content using, for example, an assistance system. On the other hand, when the event data is automatically extracted, for example, the free viewpoint content is input to an analysis application such as a trained model prepared in advance. As a result, one or more pieces of event data associated with the time axis of the free viewpoint content are output. The event data extracted in this way is, for example, stored in the content database 111 in association with the free viewpoint content.

### (Content viewing unit 121)

The content viewing unit 121 includes, for example, an input unit, a processing unit, and a display unit, and reproduces, to the user, a video of the free viewpoint content provided from the database 110 directly or via the server 100.

For example, the user inputs, from an input unit of the user terminal 120, designation of free viewpoint content to be viewed and an instruction to start viewing. Furthermore, during viewing of the free viewpoint content, the user inputs, via the input unit, an instruction regarding a viewpoint position and a viewing direction in a virtual space developed with the free viewpoint content. When the designation of free viewpoint content to be viewed or the instruction to start viewing is input, the processing unit acquires the free viewpoint content directly from the database 110 or from the server 100. Then, the processing unit generates a video to be provided to the user by rendering the free viewpoint content within an angle of view based on the viewpoint position and the viewing direction input to the input unit. The video generated as described above is presented to the user by being displayed on the display unit.

### (Viewing history database 112)

The viewing history database 112 accumulates information related to the user who views the free viewpoint content including the viewing history of the user for each piece of free viewpoint content. The viewing history may be accumulated for each user, for each user category (age, sex, hobby/preference, etc.), or for the whole without distinguishing users. Furthermore, each viewing history may include information (including viewing time information, viewing position information, and reaction information to be described later) indicating which scene (position and time) the user has viewed in the free viewpoint content. Furthermore, the viewing history may include information regarding the user (age, sex, hobby/preference, etc.).

### (Event importance calculation unit 101)

Although the operation will be detailed later, the event importance calculation unit 101 calculates an importance level related to the event (hereinafter also referred to as an event importance level) in the free viewpoint content.

### (Motion importance calculation unit 102)

Although the operation will be detailed later, the motion importance calculation unit 102 calculates an importance level related to motion of the object (hereinafter also referred to as a motion importance level) in the free viewpoint content. Note that the motion of the avatar or the object may be one of elements configuring the free viewpoint content.

### (Viewing importance calculation unit 103)

Although the operation will be detailed later, the viewing importance calculation unit 103 calculates an importance level based on the user's viewing history of the free viewpoint content (hereinafter also referred to as a viewing importance level).

### (Highlight information generation unit 104)

Although the operation will be detailed later, the highlight information generation unit 104 generates information for identifying a highlight scene (hereinafter also referred to as highlight information) in the free viewpoint content based on the importance level calculated by one or more of the event importance calculation unit 101, the motion importance calculation unit 102, and the viewing importance calculation unit 103. The highlight information generated may include, for example, information indicating a position (e.g., coordinates) and time (hereinafter also referred to as a highlight position/time) of the highlight scene. The highlight time may be a viewing time with a length shorter than a temporal length of the original free viewpoint content.

### (Highlight viewpoint determination unit 105)

Although the operation will be detailed later, the highlight viewpoint determination unit 105 determines an optimum viewpoint position and viewing direction (hereinafter also referred to as a highlight viewpoint) for rendering the highlight scene identified by the highlight information generation unit 104.

### (Highlight use unit 122)

The highlight use unit 122 presents, to the user, information for identifying the highlight scene and a highlight scene video based on the highlight information provided from the highlight information generation unit 104. At that time, the highlight use unit 122 may generate a video to be presented to the user by rendering the free viewpoint content based on the viewpoint position and the viewing direction acquired from the highlight viewpoint determination unit 105, or may present, to the user, the time and position of the highlight scene by presenting the viewpoint position and the viewing direction acquired from the highlight viewpoint determination unit 105.

### 1.3 Operation flow example

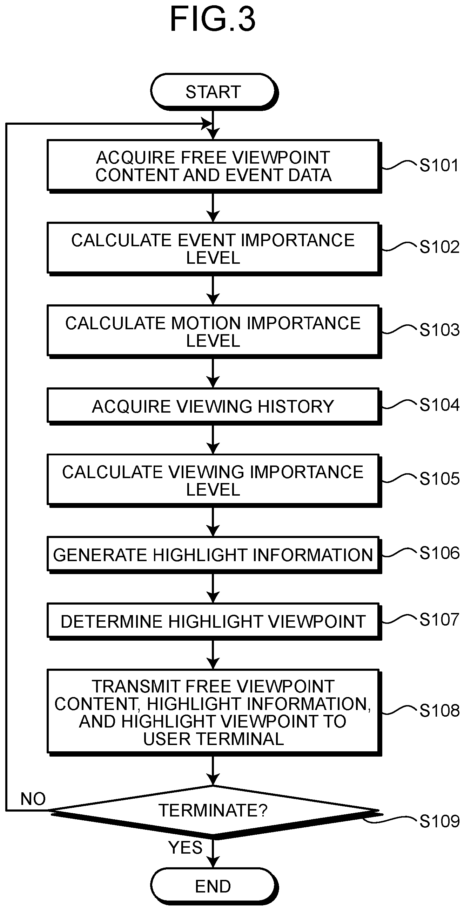

Next, a schematic operation example of the information processing system 1 according to the present embodiment will be described with reference to FIG. 3.

As illustrated in FIG. 3, in the present operation, first, target free viewpoint content and event data associated with the target free viewpoint content are acquired from the content database 111 (Step S101), and are input to each of the event importance calculation unit 101 and the motion importance calculation unit 102. Note that the server 100 may extract the event data from the free viewpoint content when acquiring the free viewpoint content from the content database 111. In this case, the event data may not be stored in the content database 111.

The event importance calculation unit 101 calculates the event importance level from the input free viewpoint content and event data (Step S102), and inputs the event importance level calculated to the highlight information generation unit 104.

On the other hand, the motion importance calculation unit 102 calculates the motion importance level from the input free viewpoint content and event data (Step S103), and inputs the motion importance level calculated to the highlight information generation unit 104. Note that Step S102 and Step S103 may be executed in parallel.

In parallel with the operation in Steps S101 to S103, the viewing history of the free viewpoint content accumulated in the viewing history database 112 is acquired (Step S104) and input to the viewing importance calculation unit 103. In the viewing history database 112, the viewing history of the free viewpoint content by a specified or unspecified user may be accumulated as needed.

The viewing importance calculation unit 103 calculates the viewing importance level from the input viewing history (Step S105), and inputs the viewing importance level calculated to the highlight information generation unit 104.

The highlight information generation unit 104 generates the highlight information indicating the position (e.g., coordinates) and time of the highlight scene based on one or more of the input event importance level, motion importance level, and viewing importance level (Step S106), and inputs the highlight information generated to the highlight viewpoint determination unit 105.

From a positional relationship between a highlight scene position included in the highlight information and an obstacle in this scene in the free viewpoint content, the highlight viewpoint determination unit 105 determines the highlight viewpoint indicating an appropriate position and direction to view (Step S107).

The highlight information and the highlight viewpoint obtained as described above are transmitted together with the free viewpoint content to the user terminal 120 via the network 130 (Step S108), and are used for viewing the free viewpoint content on the user terminal 120. For example, in the user terminal 120, a digest video of the free viewpoint content may be created using the highlight information and the highlight viewpoint, and reproduced for the user.

Thereafter, for example, the server 100 determines whether or not to terminate the present operation (Step S109). When ending is selected (YES in Step S109), the present operation is terminated. On the other hand, when not terminating the present operation (NO in Step S109), the process returns to Step S101, and the operation in Step S101 and subsequent steps are executed.

Note that, in the operation exemplified above, the position and time of the highlight scene and the viewpoint position and the viewing direction at the time of viewing the highlight scene are determined and presented to the user. However, it is not necessary to provide all the information to the user depending on characteristics and viewing styles of the free viewpoint content, and one or more pieces of information may be provided to the user and used for viewing the free viewpoint content.

### 1.4 Detailed example of operation flow

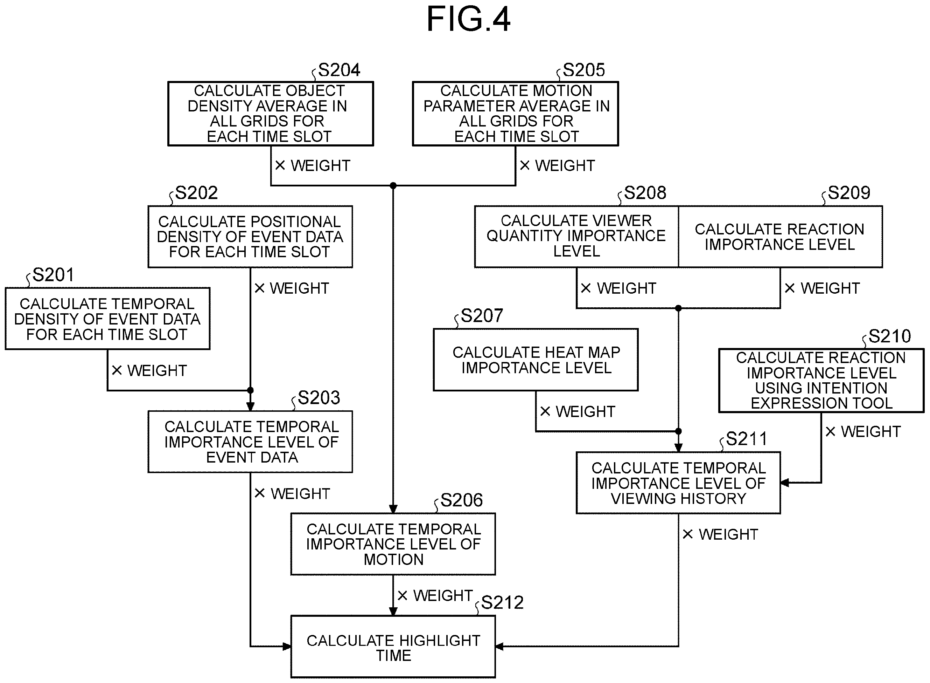

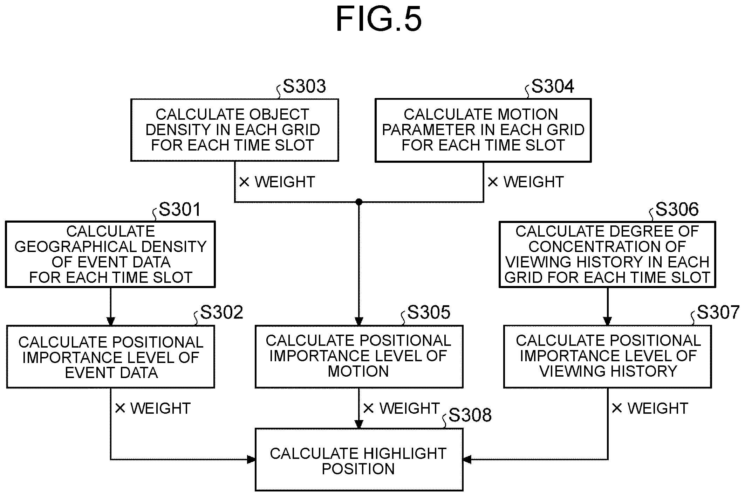

Next, each step in the above-described operation flow will be detailed with reference to operation flow examples illustrated in FIGS. 4 and 5. FIG. 4 illustrates an operation flow example when calculating the highlight time according to the present embodiment, and FIG. 5 illustrates an operation flow example when calculating the highlight position according to the present embodiment. Note that, in the following operation example, an appropriate calculation method for each element may change depending on a type of subject used to produce the free viewpoint content. In the following description, for the sake of clarity, a case where a subject of free viewpoint content is sports, such as soccer, will be continuously described as an example.

### 1.4.1 Example of event importance calculation flow

First, the event importance calculation flow illustrated in Step S102 of FIG. 3 will be described using an example. In the event importance calculation flow, the importance level with respect to position (hereinafter also referred to as a positional importance level) and the importance level with respect to time (hereinafter also referred to as a temporal importance level) in the free viewpoint content are calculated based on the event data included in the free viewpoint content. Therefore, the event importance level according to the present embodiment may include the positional importance level and the temporal importance level of the event data.

### (Example of positional importance calculation)

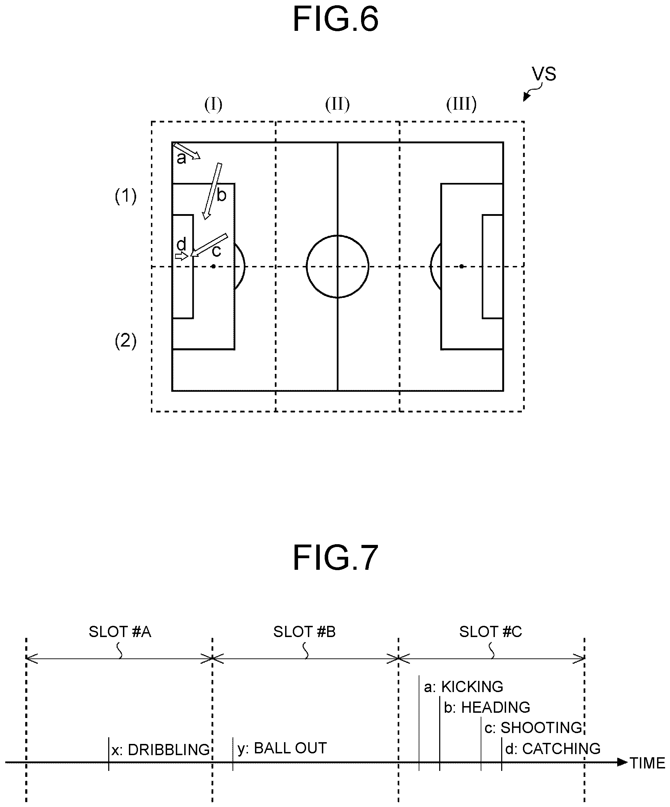

First, a calculation example of the positional importance level of the event data will be described. FIG. 6 is a diagram illustrating the calculation example of the positional importance level of the event data according to the present embodiment. Note that FIG. 6 illustrates, as an example, an event that occurred within five seconds (e.g., equivalent to a unit time described later) from a certain time t in a soccer game. Furthermore, in the present description, a virtual space of the free viewpoint content is represented by a two-dimensional plane for clarity, but the virtual space may actually be a three-dimensional space.

As illustrated in FIG. 6, in the present embodiment, a virtual space VS of the free viewpoint content is divided into a plurality of grid-like (cube-like in the three-dimensional space) regions (hereinafter also referred to as a grid). In the example illustrated in FIG. 6, the virtual space VS is divided into two rows and three columns including two rows (1) and (2) and three columns (I) to (III), in total of six grids (I, 1) to (III, 2) .

In the calculation of the event importance level, a geographical density of the event data for each time slot is calculated for each of the grids (I, 1) to (III, 2) divided as described above (see Step S301 in FIG. 5). The time slot may be each period when the time axis of the free viewpoint content is divided for each predetermined time (hereinafter also referred to as the unit time).

In the example illustrated in FIG. 6, offence and defense in front of the goal are performed in the grid (I, 1) at an upper left corner. Therefore, a plurality of players a to d are gathered in the grid (I, 1) and performing many actions in a short time. On the other hand, in other grids (II, 1) to (III, 2), offense and defense involving the ball are not performed, and players are, for example, simply moving or waiting. Therefore, there is a far distance between the players, and motion of each player is small.

In the above scene, since the geographical density of event in the grid (I, 1) at the upper left corner is high, it is highly probable that this grid (I, 1) is the highlight.

Based on this concept, the event importance calculation unit 101 calculates the positional importance level of the event data at a certain time (time slot) and a certain point (grid) by obtaining the geographical density of the event data (hereinafter also referred to as an event density) for each grid in each time slot and normalizing the value in a range of 0 to 1 (see Step S302 in FIG. 5). At that time, each piece of event data may be multiplied by a preset weight. This is because there may be a difference in the importance level of the event data depending on a subject of the content, such as a sport type or a concert.

### (Example of temporal importance calculation)

Next, an example of calculating the temporal importance level of the event data will be described. The temporal importance level of the event data is calculated, for example, by adding two elements of an event data density (hereinafter, also referred to as a temporal density) and a positional density of the event data (hereinafter also referred to as a positional density) for each time slot.

### · Temporal density of event data

The temporal density of the event data is calculated, for example, based on the event data density for each time slot. FIG. 7 is a diagram illustrating a calculation example of the temporal density of event data according to the present embodiment.

In the example illustrated in FIG. 7, when the time axis of the free viewpoint content is divided into a plurality of time slots including slots #A to #C, the slot #A includes dribbling by a certain player x as event data (referred to as event data x), the slot #B includes ball out as event data (referred to as event data y), and the slot #C includes kicking by a certain player a (referred to as event data a), heading by a certain player b (referred to as event data b), shooting by a certain player c (referred to as event data c), and catching by a certain player d (referred to as event data d) as event data.

In the above example, since the number of pieces of event data (four pieces) included in the slot #C is greater than the number of pieces of event data (one piece) included in the other slots #A and #B, it is highly probable that the slot #C is the highlight.

Based on this concept, the event importance calculation unit 101 obtains the temporal density of the event data for each time slot and normalizes the value in a range of 0 to 1 (see Step S201 in FIG. 4).

### . Positional density of event data

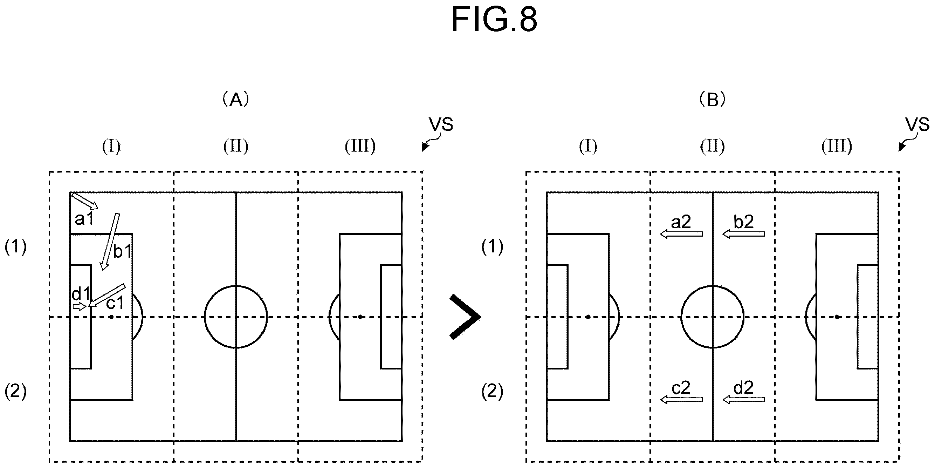

The positional density of event data is calculated based on, for example, the event data density for each grid in each time slot. FIG. 8 is a diagram illustrating a calculation example of the positional density of event data according to the present embodiment.

In FIG. 8, in a certain time slot, a case (A) where four players a1 to d1 are playing in front of the goal in the grid (I, 1) at the upper left corner and a case (B) where four players a2 to d2 are simply moving leftward in the grids (II, 1) and (II, 2) at the center of the field are illustrated. The number of pieces of event data included in the time slot shown in (A) and the number of pieces of event data included in the time slot shown in (B) are both four, and the number of pieces of event data generated in each scene is the same. However, a scene in (A) has a shorter positional interval in a virtual space associated with each piece of event data than that in a scene in (B).

In the above example, since the number of pieces of event data included in one grid is larger in the scene in (A) than in the scene in (B), it is highly probable that the scene (time slot) in (A) is the highlight.

Based on this concept, the event importance calculation unit 101 obtains the positional density of the event data for each time slot in each grid and normalizes the value in a range of 0 to 1 (see Step S202 in FIG. 4).

### . Temporal importance level

The temporal importance level of event data is obtained, for example, by adding the temporal density and the positional density calculated as described above and normalizing the added value in a range of 0 to 1 (see Step S203 in FIG. 4). At that time, each of the temporal density and the positional density may be multiplied by the preset weight. This is because there may be a difference in the importance of the event depending on a subject of the content, such as a sport type or a concert. For example, in soccer and basketball games, it is assumed that a higher density is more likely to be an important scene. However, in an American football game and drama, a lower density is more likely to be an important scene.

In addition, in the calculation of the importance level based on the event data, different weights may be set and multiplied for each event. This is because, for example, an event such as "kicking" is more likely to be the highlight than an event such as "simply jumping", and thus the importance level may change for each event or content.

### 1.4.2 Example of motion importance calculation flow

Next, the calculation flow of the motion importance level illustrated in Step S103 of FIG. 3 will be described with an example. In the calculation flow of the motion importance level, a positional importance level and a temporal importance level in the free viewpoint content are calculated based on the density, velocity, acceleration, and the like of the motion of the object included in the free viewpoint content. Therefore, the motion importance level according to the present embodiment may include the positional importance level and the temporal importance level of the motion of the object, similarly to the event importance level.

### (Example of positional importance calculation)

First, a calculation example of the positional importance level of the motion will be described. The positional importance level of the motion is calculated, for example, by adding two elements of a density of the object (hereinafter also referred to as an object density) in each grid (see Step S303 in FIG. 5) and an average of a velocity, acceleration, and the like of the object (hereinafter also referred to as a motion parameter) in each grid (see Step S304 in FIG. 5) for each time slot. The motion parameter is not limited to the average, and may be variously modified such as a median value, a standard deviation, or an integrated value.

For example, in the case of soccer game, it is considered that players and ball actively move close together in a more important scene. Therefore, in the above scene, the object density and the motion parameter are expected to take large values. Therefore, the motion importance calculation unit 102 normalizes each of the object density and the motion parameter in a range of 0 to 1, adds normalized values, and then normalizes the added value again to calculate the positional importance level related to the motion of the object for each grid in each time slot (see Step S305 in FIG. 5). At that time, each of the object density and the motion parameter may be multiplied by the preset weight. This is because, similarly to the temporal importance level of the event data, there may be a difference in the importance level of the motion of the object depending on a subject of the content, such as a sport type or a concert.

### (Example of temporal importance calculation)

Next, an example of calculating the temporal importance level of the motion will be described. The temporal importance level of the motion is calculated, for example, by adding two elements of an average of the object density in all grids (hereinafter also referred to as an object density average) (see Step S204 in FIG. 4) and an average of motion parameters in all the grids (hereinafter also referred to as a motion parameter average) (see Step S205 in FIG. 4) for each time slot (see Step S206 in FIG. 4). The object density average and/or the motion parameter average are not limited to the average, and may be variously modified such as a median value, a standard deviation, or an integrated value.

In calculation of the temporal importance level, values calculated in the calculation of the positional importance level described above may be used as the object density and the motion parameter of each grid for each time slot. In this case, the motion importance calculation unit 102 may calculate the object density average and the motion parameter average of all the grids for each time slot by averaging the object density and the motion parameter in all the grids calculated for each time slot in the calculation of the positional importance level. At that time, each of the object density and the motion parameter may be multiplied by the preset weight. This is because, similarly to the positional importance level, there may be a difference in the importance level of the motion of the object depending on a subject of the content, such as a sport type or a concert.

### 1.4.3 Example of viewing importance calculation flow

Next, the viewing importance calculation flow illustrated in Step S105 of FIG. 3 will be described with an example.

When viewing the free viewpoint content, the user inputs various operations, from the user terminal 120, such as seeking to a scene that the user wants to view and controlling a viewpoint position and a viewing direction when viewing the free viewpoint content. However, there is a high possibility that a scene viewed by many users is the highlight scene, and there is also a high possibility that the viewpoint position and the viewing direction set by many users in each scene are an optimum viewpoint position and viewing direction when viewing the scene.

Therefore, by collecting information regarding the seek operation (hereinafter also referred to as viewing time information) and information regarding the operation of viewpoint position and viewing direction (hereinafter also referred to as viewing position information) when the free viewpoint content is viewed by specified or unspecified users as the viewing history, it is possible to calculate the importance level of each scene (time slot) and the optimum viewpoint position and viewing direction in the scene based on the accumulated viewing history.

Furthermore, the viewing history according to the present embodiment may include information regarding voice, reaction, or the like generated by the user (hereinafter also referred to as reaction information) while viewing the free viewpoint content, in addition to the viewing time information and the viewing position information. This is because there is a high possibility that cheer uttered by the viewer at a certain moment of excitement becomes larger than that in other scenes, and there is also a high possibility that conversation at that scene becomes active when a voice chat, a text chat, or the like is performed.

Therefore, in the present embodiment, the content viewing unit 121 has a function of inputting voice uttered by the user during viewing, and a function of performing voice chat, text chat, or the like between the users (hereinafter also referred to as an intention expression tool). The reaction information collected by the intention expression tool from the specified or unspecified user during viewing of specific free viewpoint content is accumulated in the viewing history database 112 as a part of the viewing history associated with the free viewpoint content. Note that the viewing history including the reaction information may be collected in a situation where the highlight information or the like is not provided via the highlight use unit 122, or may be collected in a situation where the highlight information or the like is provided.

The viewing importance level according to the present embodiment may include a positional importance level and a temporal importance level, similarly to the event importance level and the motion importance level.

### (Example of positional importance calculation)

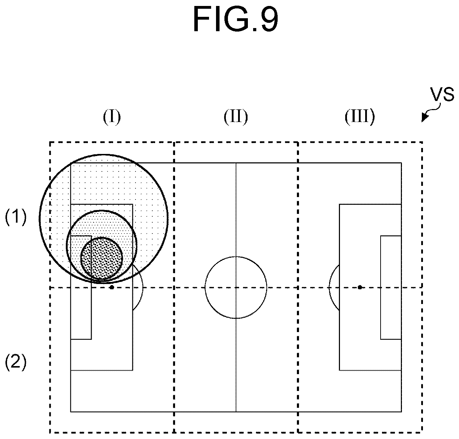

First, a calculation example of the positional importance will be described. FIG. 9 is a diagram illustrating the calculation example of the positional importance level in the viewing importance level according to the present embodiment. As illustrated in FIG. 9, in the calculation of the positional importance level in the viewing importance level, a heat map of the viewing history is generated based on the viewing history accumulated in the viewing history database 112. Note that, in FIG. 9, darker hatching is applied to an area viewed by more users in a certain time slot.

When there are many users viewing a specific position in a certain time slot, it is expected that there is an important viewing position as compared with a case where the virtual space VS is viewed evenly. Therefore, for example, the viewing importance calculation unit 103 calculates a degree of concentration of the viewing history in each grid in a certain time slot using the heat map created based on the viewing history (see Step S306 in FIG. 5), and then calculates a difference between the degree of concentration of the viewing history at a position (e.g., grid) where the viewing history is most concentrated and an average of degrees of concentration at other positions (grids) in the viewing history as the positional importance level at the specific position (grid) (see Step S307 in FIG. 5).

### (Example of temporal importance calculation)

Next, a calculation example of the temporal importance level will be described. The temporal importance level in the viewing importance level may be calculated, for example, based on the importance level obtained from each of the heat map of the viewing history for each time slot, the number of viewers for each time slot, and the reaction information for each time slot.

### · Importance level obtained from heat map (heat map importance level)

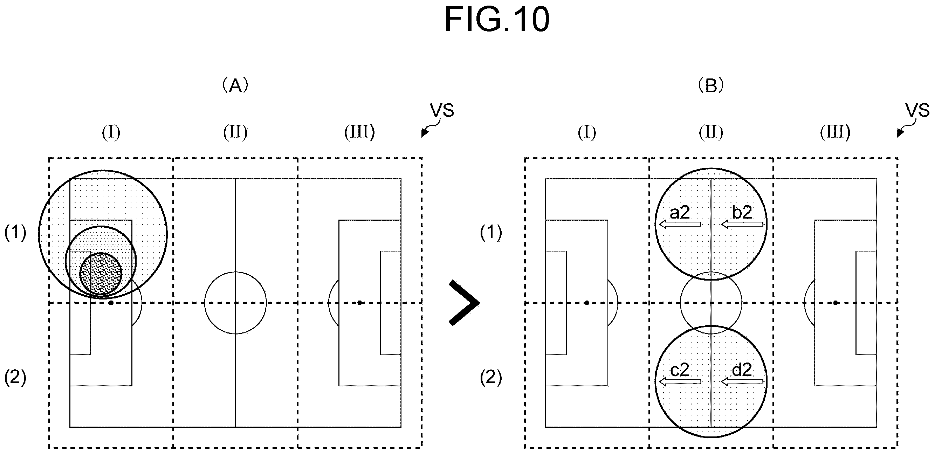

FIG. 10 is a diagram illustrating a calculation example of the importance level (hereinafter also referred to as a heat map importance level) obtained from the heat map according to the present embodiment. As illustrated in FIG. 10, when the heat map for each time slot is created, as illustrated in (A), there is a high possibility that the game is more excited in a scene where viewing spots (grids) of the users are concentrated than in a scene where viewing spots are dispersed in a wide area as illustrated in (B). Therefore, the viewing importance calculation unit 103 calculates the degree of concentration of the viewing position in each grid for each time slot, and uses the maximum value of the calculated degree of concentration as an index of the importance level of the time slot. Then, the viewing importance calculation unit 103 normalizes the index of the importance level determined for each time slot in a range of 0 to 1 to calculate the heat map importance level in each time slot (see Step S207 in FIG. 4).

### . Importance derived from the number of viewers (viewer quantity importance level)

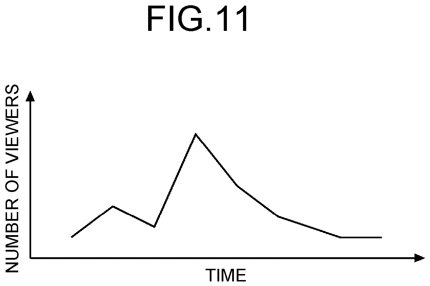

FIG. 11 is a diagram illustrating a calculation example of an importance level obtained from the number of viewers (hereinafter referred to as a viewer quantity importance level) according to the present embodiment. As illustrated in FIG. 11, it is possible to specify transition of the number of viewers along the time axis of the free viewpoint content by analyzing the viewing history accumulated in the viewing history database 112.

For example, when the user can move the viewing position on the time axis by operating a seek bar or the like displayed as a user interface (UI) on the display unit of the user terminal 120, there is a high possibility that a time zone in which many users are viewing without seeking (i.e., time slot with many viewers) is a time zone in which the game is more excited. Therefore, the viewing importance calculation unit 103 normalizes the number of viewers for each time slot in a range of 0 to 1 to calculate the viewer quantity importance level for each time slot (see Step S208 in FIG. 4).

### · Importance level obtained from reaction information (reaction importance level)

The reaction information collected by the intention expression tool may include voice uttered by the user during viewing (sound volume, information, and the like may be included), information exchanged between users using a voice chat function, a text chat function, and the like in the intention expression tool. Therefore, the viewing importance calculation unit 103 calculates the reaction importance level based on the voice, the information, and the like collected as the reaction information.

For example, regarding the voice uttered by the user during viewing, the voice input by the voice chat function or the voice simply uttered by the user may be recorded, and the reaction importance level may be calculated from a change of a volume of the voice.

Specifically, for example, a difference between the maximum volume and the minimum volume for each time slot is calculated for all users, and the calculated difference is normalized in a range of 0 to 1. Then, a time slot having a large value after normalization is regarded as a time zone corresponding to the highlight scene, and an average of values (after normalization) calculated for all users is calculated as the reaction importance level (see Step S209 in FIG. 4).

Note that, when the intention expression tool has a function of sending a simple message such as a stamp, it is conceivable that the user may use this function to express his/her own emotion. Furthermore, it is also conceivable that the intention expression tool has a function of actively sending a viewer's opinion, such as a text chat, in addition to a function of sending a simple message such as a stamp. Therefore, the viewing importance calculation unit 103 may calculate the reaction importance level by calculating the temporal density of the intention (reaction information) transmitted by the user using the intention expression tool and normalizing the temporal density in a range of 0 to 1 (see Step S210 in FIG. 4).

### · Temporal importance level

The temporal importance level in the viewing importance level is obtained by adding at least one of the heat map importance level, the viewer quantity importance level, and the reaction importance level calculated as described above and normalizing the added value in a range of 0 to 1 (see Step S211 in FIG. 4). At that time, each of the heat map importance level, the viewer count importance level, and the reaction importance level may be multiplied by the preset weight.

### 1.4.4 Example of highlight information generation flow

In generation of the highlight information illustrated in Step S106 of FIG. 3, the highlight information is generated based on a total of six importance levels that are the event importance level (the positional importance level and the temporal importance level), the motion importance level (the positional importance level and the temporal importance level), and the viewing importance level (the positional importance level and the temporal importance level) acquired as described above.

For example, the highlight information generation unit 104 may generate the highlight information including the time (time slot) and the position (grid) of the highlight scene by adding the above six importance levels. For example, the highlight information generation unit 104 may calculate the highlight time by adding the temporal importance level of the event data, the temporal importance level of the motion of the object, and the temporal importance level of the viewing history (see Step S212 in FIG. 4). Furthermore, the highlight information generation unit 104 may calculate the highlight position by adding the positional importance level of the event data, the positional importance level of the motion of the object, and the positional importance level of the viewing history (see Step S308 in FIG. 5).

At that time, each of the six importance levels may be multiplied by the preset weight. This is because, for example, when the number of pieces of accumulated viewing information is small, there is a high possibility that a correct value cannot be obtained, or there is a possibility that there is a bias in the event importance level and the motion importance level depending on the free viewpoint content. Furthermore, the position of the grid here may be, for example, a reference position set in advance with respect to the grid, such as coordinates of the center of the grid or coordinates of any of the four corners.

### 1.4.5 Example of highlight viewpoint determination flow

In the flow up to the generation of the highlight information described above, the position (grid) of the highlight scene, i.e., "where to view" is obtained. However, in the free viewpoint content, it is also necessary to determine the viewpoint, i.e., "where to view from". Therefore, in Step S107 of FIG. 3, the optimum highlight viewpoint (viewing position and viewing direction) for viewing the highlight position is determined from the relationship between the position (grid) of the scene in the highlight information and a position of an obstacle (such as an object (building may be included)) in the free viewpoint content in the scene.

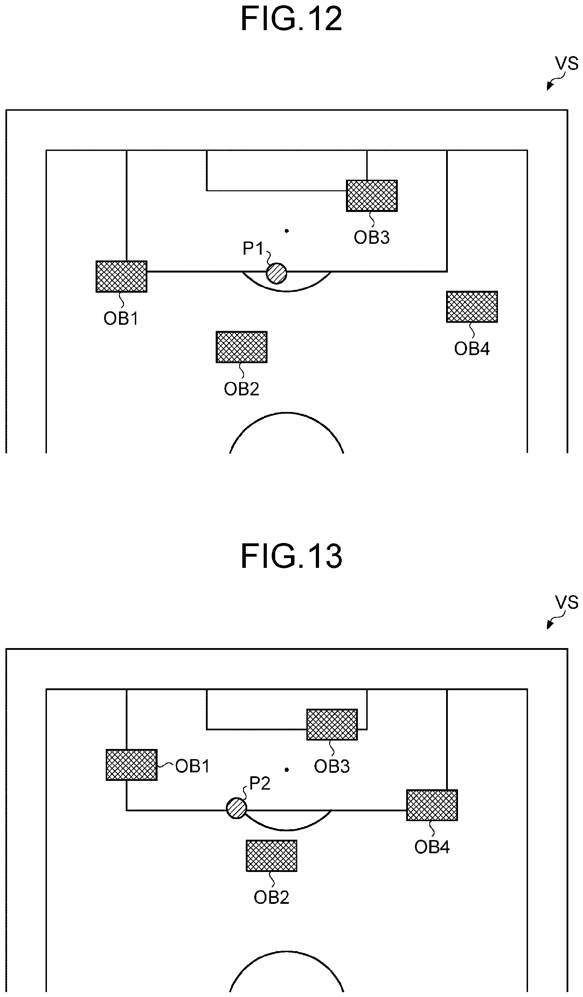

FIGS. 12 to 16 are diagrams illustrating an example of a flow of determining the highlight viewpoint according to the present embodiment.

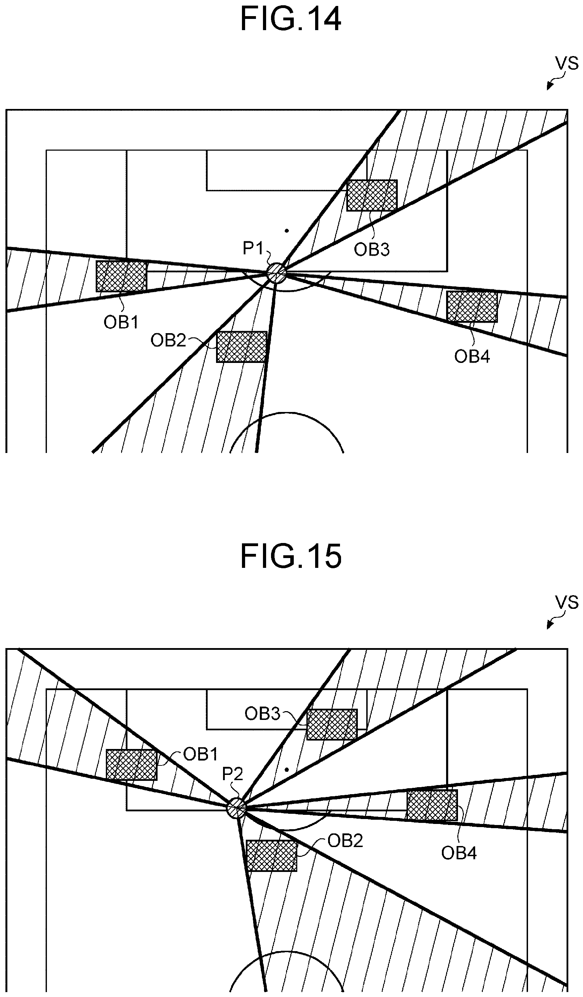

For example, in a certain time slot (referred to as a frame N), when objects OB1 to OB4 and a highlight position P1 exist at positions illustrated in FIG. 12, and objects OB1 to OB4 and a highlight position P2 exist at positions illustrated in FIG. 13 in a next time slot (referred to as a frame N + 1), an area where the highlight position P1 is hidden by the objects OB1 to OB4 in the frame N (i.e., blind spot area, hereinafter also referred to as a blocked area) is a hatched area in FIG. 14, and a blocked area of the highlight position P2 by the objects OB1 to OB4 in the frame N + 1 is a hatched area in FIG. 15. Note that the number of objects may be increased or decreased between frames.

The blocked area in each frame can be obtained by various methods such as a method of geometrically and mathematically calculating the blocked area from a positional relationship between the highlight position and the object using a linear equation or the like, and a method of generating RAY having a hit determination from the highlight position for measurement such as that used in simultaneous localization and mapping (SLAM).

Here, when the viewpoint position greatly fluctuates during viewing of a certain scene, it may give discomfort such as motion sickness to the viewer, and it may also become a factor of lowering a video quality. For example, when a viewpoint position set in the frame N based on the blocked area illustrated in FIG. 14 is included in the blocked area of the frame N + 1 illustrated in FIG. 15, the viewpoint position may be frequently changed, and there is a possibility that discomfort such as visually induced motion sickness is given to the viewer.

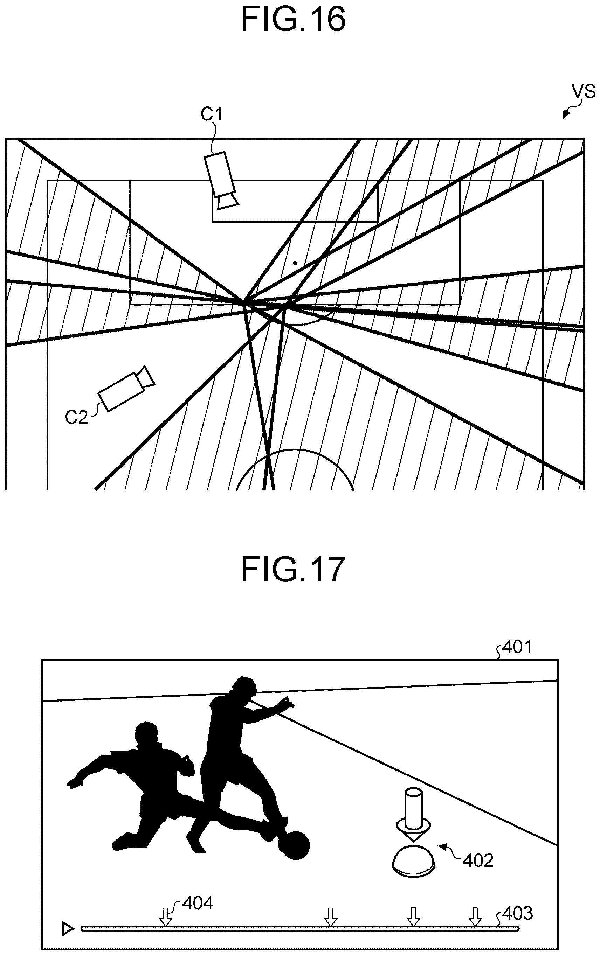

Therefore, as illustrated in FIG. 16, the highlight viewpoint determination unit 105 superimposes the blocked areas on a plurality of consecutive frames included in the highlight scene, thereby identifying an area that will not be the blocked area in the plurality of frames (area not hatched in FIG. 16), sets the highlight viewpoints C1 and C2 in the identified area, and determines the optimum highlight viewpoint (viewing position and viewing direction) for viewing the highlight positions P1 and P2.

Note that, in the present description, the virtual space is represented two-dimensionally for the sake of simplicity, but the viewpoint position may be determined by a similar method also for a three-dimensional virtual space.

The highlight viewpoint determination unit 105 may notify, to the highlight use unit 122, all of one or more highlight viewpoints C1 and C2 identified as described above, or may determine one optimum highlight viewpoint from a plurality of highlight viewpoints C1 and C2 identified based on a positional relationship of the objects, a distance from the highlight positions P1 and P2, or the like, and notify, to the highlight use unit 122, the highlight viewpoint determined. Alternatively, the highlight viewpoint determination unit 105 may determine, as one highlight viewpoint, a viewpoint position having the shortest distance from an immediately preceding viewpoint position in the one or more highlight viewpoints C1 and C2 determined as the next viewpoint position.

### 1.5 Usage example of highlight information and highlight viewpoint

The highlight information and the highlight viewpoint generated or determined as described above are transmitted to the user terminal 120 together with the free viewpoint content (Step S108 in FIG. 3), and are used by the highlight use unit 122 in the user terminal 120. Various forms can be considered as usage of the highlight information and the highlight viewpoint. Some of them will be exemplified below.

### 1.5.1 Generation of digest video

For example, information regarding "how important a certain scene is" and "appropriate position and direction to view the scene" may be identified based on the highlight information and the highlight viewpoint. Therefore, the highlight use unit 122 can automatically generate a digest video obtained by extracting a highlight scene from the free viewpoint content by setting a threshold for the importance level of the scene that is identifiable from the highlight information. At that time, by enabling the user to adjust the threshold, the highlight use unit 122 can also generate a different digest video for each user.

Note that, when the highlight use unit 122 is implemented in the user terminal 120, the digest video may be generated by rendering the free viewpoint content based on the highlight information and the highlight viewpoint in the user terminal 120. On the other hand, when the highlight use unit 122 is implemented in the server 100, the server 100 may render the free viewpoint content based on the highlight information and the highlight viewpoint to generate the digest video, and the generated digest video may be transmitted to the user terminal 120 via the network 130 and reproduced toward the user by the content viewing unit 121 in the user terminal 120.

### 1.5.2 Suggestion for viewing position (viewpoint position)

Furthermore, for example, it is also possible to specify information such as "good to see from this viewpoint" and "highlight point is at this time" based on the highlight information and the highlight viewpoint. These pieces of information may be provided to the user in a form such as a tag. FIG. 17 is a diagram illustrating an example of a display screen of the free viewpoint content according to the present embodiment.

As illustrated in FIG. 17, for example, information on "good to see from this viewpoint" may be arranged as an object 402 at a corresponding position (proposed viewpoint position) in the free viewpoint content and provided to the user via a display screen 401. Furthermore, as illustrated in FIG. 17, for example, information on "highlight point is at this time" may be provided to the user as a tag 404 attached to a seek bar 403 displayed as the UI on the display screen 401.

In this way, for example, by providing the user with information that "it is good to see from this viewpoint" and "the highlight point is at this time", a high-quality viewing experience may be offered to the user more smoothly at a high speed.

Note that, since some users may wish to select the viewing time or the viewing position by themselves, the user may be able to select whether or not to use a proposal from the highlight use unit 122.

In this manner, by adopting a configuration that the viewing time and the viewing position are not forcibly controlled by the information processing system 1, it is possible to suppress the user from having discomfort such as 3D motion sickness or screen motion sickness.

### 1.5.3 Generation of play digest video for coaching

For example, when calculating the importance level (positional importance level and/or temporal importance level) from the event data in the event importance calculation unit 101, it is possible to extract a scene in which a specific player, actor, or the like is captured and generate a digest video by adopting a configuration that enables to assign a different weight to each avatar. In addition, for example, it is considered that the digest video generated in this way is suitably used for the purpose of coaching sports or a theatrical performance. Note that the setting of the weight for a specific player, actor, or the like may be configured to be able to be set from, for example, the input unit of the user terminal 120 to the event importance calculation unit 101.

### 1.5.4 Utilization of meta information

When a subject of the free viewpoint content is a drama or a concert, a script, lyrics, or the like can be used as the event data or metadata. Therefore, it is also possible to configure such that a hook-line part of the lyrics or a climax in the drama is taken into consideration when generating the highlight information or determining the highlight position.

### 1.6 Summary

As described above, according to the present embodiment, it is possible to identify which scene in the free viewpoint content is the highlight and from which point to view is appropriate based on the event data, motion of the object, and the viewing history. Thus, it is possible to propose the highlight scene to the user or automatically generate the digest video of the highlight scene. As a result, it is possible to prevent the viewer from missing the highlight scene.

### 1.7 Modification

Next, modification of the present embodiment will be described with some examples.

### 1.7.1 Modification of importance calculation unit

In the embodiment described above, an average value (e.g., average object density or average motion parameter of the entire grid) is used when obtaining various importance levels (e.g., calculation of temporal importance level in the motion importance level), but the present disclosure is not limited thereto. For example, a median, a standard deviation, or an integrated value may be used as described above.

In addition, in the above-described embodiment, the parameter for obtaining the importance level (e.g., event density, temporal density and positional density of event data and their added value; object density, motion parameter, and their added value; importance level index determined for each time slot, number of viewers for each time slot, a difference between maximum volume and minimum volume for each time slot, temporal density of reaction information, a value adding at least one of heat map importance level, viewer quantity importance level, and reaction importance level) is normalized in a range of 0 to 1. However, the present disclosure is not limited thereto, and various normalization methods may be adopted.

Furthermore, not only the velocity and acceleration of the object but also various indexes indicating the motion of the object such as angular velocity and angular acceleration may be used for the calculation of the motion importance level.

As described above, the method of calculating the importance level is not limited to the method exemplified in the above embodiment, and may be variously modified and designed, for example, according to the target free viewpoint content and the user.

### 1.7.2 Modification of combination of highlight information and highlight viewpoint

The embodiment described above refers to the case where the highlight use unit 122 uses all of the highlight information (highlight position and highlight viewpoint) and the highlight viewpoint, but the present disclosure is not limited thereto. The information used by the highlight use unit 122 and/or the information transmitted to the highlight use unit 122 may be part of the highlight information (highlight position and highlight viewpoint) and the highlight viewpoint. At that time, it may be possible to select which information is not used on the system side or the user side.

### 1.7.3 Modification for remote

When a concert, a drama, or the like is converted into content and used as free viewpoint content, the above-described embodiment may be applied. However, in that case, it is possible to provide the user with a digest video or suggestion for a more interesting scene by giving a larger weight to the event importance level than other importance levels or adding natural language meta information such as a script to the calculation.

### 1.7.4 Fixing of highlight viewpoint to bird's-eye view

Videos of sports such as soccer and baseball include a standard bird's-eye viewpoint used in TV programs and the like. Therefore, when sports are the subject of the free viewpoint content, the highlight viewpoint may be fixed to a specific viewpoint such as the bird's-eye view or a fixed camera.

### 1.7.5 Reduction of 3D motion sickness/video motion sickness

When viewing the free viewpoint content, a sudden change in viewpoint may induce the 3D motion sickness or video motion sickness of the viewer. In other words, in the above-described embodiment, the highlight viewpoint is calculated using the information obtained from the free viewpoint content (event data, motion of object, and viewing history). In this case, when the viewer uses his/her viewing operation and the highlight viewpoint in combination, the viewpoint position is frequently and largely changed. This may induce the 3D motion sickness or video motion sickness. Therefore, the highlight viewpoint determination unit 105 may determine the highlight viewpoint such that the viewpoint (e.g., immediately preceding viewpoint position and viewing direction) is located as close as possible to the viewpoint used by the viewer. As a result, it is possible to prevent the viewpoint position from being frequently and largely changed, so as to reduce the induction of the 3D motion sickness or video motion sickness.

### 2. Hardware configuration

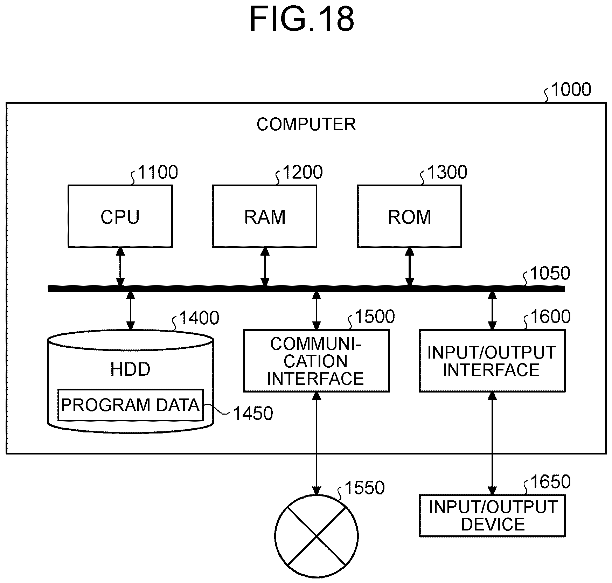

For example, at least one of the server 100 and the user terminal 120 according to the above-described embodiment and the modifications thereof may be realized by a computer 1000 having a configuration illustrated in FIG. 18. FIG. 18 is a hardware configuration diagram illustrating an example of the computer 1000 that implements at least one function of the server 100 and the user terminal 120. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program stored in the ROM 1300 or the HDD 1400, and controls each unit. For example, the CPU 1100 develops a program stored in the ROM 1300 or the HDD 1400 into the RAM 1200, and executes processes corresponding to various programs.

The ROM 1300 stores a boot program such as a basic input output system (BIOS) executed by the CPU 1100 when the computer 1000 is activated, a program dependent on hardware of the computer 1000, and the like.

The HDD 1400 is a computer-readable recording medium that non-transiently records a program executed by the CPU 1100, data used by the program, and the like. Specifically, the HDD 1400 is a recording medium that records the information processing program according to the present disclosure, which is an example of program data 1450.

The communication interface 1500 is an interface to connect the computer 1000 with an external network 1550 (e.g., the Internet). For example, the CPU 1100 receives data from another device or transmits data generated by the CPU 1100 to another device via the communication interface 1500.

The input/output interface 1600 has a configuration including the I/F unit 18 described above, and is an interface for connecting an input/output device 1650 and the computer 1000. For example, the CPU 1100 receives data from the input device such as a keyboard or mouse via the input/output interface 1600. In addition, the CPU 1100 transmits the data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the server 100/user terminal 120 according to the above-described embodiment, the CPU 1100 of the computer 1000 implements at least one function of the server 100/user terminal 120 by executing a program loaded on the RAM 1200. In addition, the HDD 1400 stores a program and the like according to the present disclosure. Note that the CPU 1100 reads the program data 1450 from the HDD 1400 and executes the program data 1450. As another example, these programs may be acquired from another device via the external network 1550.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

Furthermore, each of the above-described embodiments may be used alone, or may be used in combination with another embodiment.

The present technology may also have the following configurations.
(1) An information processing apparatus comprising:
   an acquisition unit configured to acquire at least one of information related to a user who views free viewpoint content and information related to the free viewpoint content; and
   a generation unit configured to generate a viewing time and a viewing position of the free viewpoint content based on the at least one of the information related to the user and the information related to the free viewpoint content.
(2) The information processing apparatus according to (1), wherein
   the generation unit generates the viewing time indicating a length shorter than a temporal length of the free viewpoint content.
(3) The information processing apparatus according to (1) or (2), further comprising
   an output unit configured to output the viewing time and the viewing position to an outside via a predetermined network.
(4) The information processing apparatus according to any one of (1) to (3), further comprising
   a use unit configured to generate a digest video of the free viewpoint content based on the viewing time and the viewing position.
(5) The information processing apparatus according to any one of (1) to (4), further comprising
   a determination unit configured to determine a viewpoint position and a viewing direction in the free viewpoint content, the viewpoint position and the viewing direction being used in generating a video at the viewing position.
(6) The information processing apparatus according to (5), wherein
   the determination unit sets the viewpoint position in an area where the viewing position is not blocked by one or more objects in the free viewpoint content when the viewing position is viewed from the viewpoint position.
(7) The information processing apparatus according to (6), wherein
   the determination unit sets the viewpoint position in the area where the viewing position is not blocked by the one or more objects when the viewing position is viewed from the viewpoint position in a plurality of consecutive frames.
(8) The information processing apparatus according to any one of (5) to (7), wherein
   the determination unit determines one or more of the viewpoint positions as a next viewpoint position, and then determines, from the one or more viewpoint positions determined, a viewpoint position having a shortest distance from an immediately preceding viewpoint position as the next viewpoint position.
(9) The information processing apparatus according to any one of (1) to (8), further comprising
   an importance calculation unit configured to calculate an importance level of the free viewpoint content for each time zone based on the information related to the free viewpoint content, wherein
   the generation unit generates the viewing time and the viewing position based on the importance level.
(10) The information processing apparatus according to (9), wherein
   the importance level includes a first importance level for each position and a second importance level for each time zone in a virtual space represented by the free viewpoint content.
(11) The information processing apparatus according to (10), wherein
   the importance calculation unit calculates the importance level by adding the first importance level and the second importance level.
(12) The information processing apparatus according to (11), wherein
   the importance calculation unit multiplies the first importance level and the second importance level by a weight set in advance, and adds the first importance level and the second importance level each multiplied by the weight to calculate the importance level.
(13) The information processing apparatus according to any one of (10) to (12), wherein
   the importance calculation unit divides the virtual space represented by the free viewpoint content into a plurality of regions, and calculates the first importance level for each of the plurality of regions divided.
(14) The information processing apparatus according to any one of (9) to (13), wherein
   the information related to the free viewpoint content includes at least one of event data indicating an event that has occurred in the free viewpoint content, motion of one or more objects included in the free viewpoint content, and a viewing history of the free viewpoint content, and
   the importance calculation unit calculates the importance level using at least one of the event data, the motion of the one or more objects, and the viewing history.
(15) The information processing apparatus according to (14), wherein
   the importance calculation unit calculates a third importance level based on each of at least two of the event data, the motion of the one or more objects, and the viewing history, and adds the third importance levels calculated to calculate the importance level.
(16) The information processing apparatus according to (15), wherein
   the importance calculation unit multiplies the third importance level calculated based on each of the at least two of the event data, the motion of the one or more objects, and the viewing history by a weight set for each of the event data, the motion of the one or more objects, and the viewing history, and adds the third importance levels each multiplied by the weight to calculate the importance level.
(17) The information processing apparatus according to any one of (1) to (16), wherein
   the information related to the user includes at least one of age, sex, hobby, and preference.
(18) The information processing apparatus according to any one of (1) to (17), wherein
   the information related to the free viewpoint content includes at least one of event data indicating an event that has occurred in the free viewpoint content, motion of one or more objects included in the free viewpoint content, a viewing history of the free viewpoint content, and meta information given to the free viewpoint content.
(19) An information processing method executed by an information processing apparatus that provides a viewing service of free viewpoint content to a user terminal connected via a predetermined network, the method comprising:
   acquiring at least one of information related to a user who views the free viewpoint content and information related to the free viewpoint content; and
   generating a viewing time and a viewing position of the free viewpoint content based on the at least one of the information related to the user and the information related to the free viewpoint content.
(20) A program for causing a processor to function, the processor being included in an information processing apparatus that provides a viewing service of free viewpoint content to a user terminal connected via a predetermined network, the program causing the processor to implement:
   acquiring at least one of information related to a user who views the free viewpoint content and information related to the free viewpoint content; and
   generating a viewing time and a viewing position of the free viewpoint content based on the at least one of the information related to the user and the information related to the free viewpoint content.

### Reference Signs List

1 INFORMATION PROCESSING SYSTEM
100 SERVER
110 DATABASE
120, 120a, 120b USER TERMINAL
130 NETWORK
101 EVENT IMPORTANCE CALCULATION UNIT
102 MOTION IMPORTANCE CALCULATION UNIT
103 VIEWING IMPORTANCE CALCULATION UNIT
104 HIGHLIGHT INFORMATION GENERATION UNIT
105 HIGHLIGHT VIEWPOINT DETERMINATION UNIT
111 CONTENT DATABASE
112 VIEWING HISTORY DATABASE
121 CONTENT VIEWING UNIT
122 HIGHLIGHT USE UNIT
401 DISPLAY SCREEN
402 OBJECT
403 SEEK BAR
404 TAG

## Claims

1. An information processing apparatus comprising:
an acquisition unit configured to acquire at least one of information related to a user who views free viewpoint content and information related to the free viewpoint content; and
a generation unit configured to generate a viewing time and a viewing position of the free viewpoint content based on the at least one of the information related to the user and the information related to the free viewpoint content.

2. The information processing apparatus according to claim 1, wherein
the generation unit generates the viewing time indicating a length shorter than a temporal length of the free viewpoint content.

3. The information processing apparatus according to claim 1, further comprising
an output unit configured to output the viewing time and the viewing position to an outside via a predetermined network.

4. The information processing apparatus according to claim 1, further comprising
a use unit configured to generate a digest video of the free viewpoint content based on the viewing time and the viewing position.

5. The information processing apparatus according to claim 1, further comprising
a determination unit configured to determine a viewpoint position and a viewing direction in the free viewpoint content, the viewpoint position and the viewing direction being used in generating a video at the viewing position.

6. The information processing apparatus according to claim 5, wherein
the determination unit sets the viewpoint position in an area where the viewing position is not blocked by one or more objects in the free viewpoint content when the viewing position is viewed from the viewpoint position.

7. The information processing apparatus according to claim 6, wherein
the determination unit sets the viewpoint position in the area where the viewing position is not blocked by the one or more objects when the viewing position is viewed from the viewpoint position in a plurality of consecutive frames.

8. The information processing apparatus according to claim 5, wherein
the determination unit determines one or more of the viewpoint positions as a next viewpoint position, and then determines, from the one or more viewpoint positions determined, a viewpoint position having a shortest distance from an immediately preceding viewpoint position as the next viewpoint position.

9. The information processing apparatus according to claim 1, further comprising
an importance calculation unit configured to calculate an importance level of the free viewpoint content for each time zone based on the information related to the free viewpoint content, wherein
the generation unit generates the viewing time and the viewing position based on the importance level.

10. The information processing apparatus according to claim 9, wherein
the importance level includes a first importance level for each position and a second importance level for each time zone in a virtual space represented by the free viewpoint content.

11. The information processing apparatus according to claim 10, wherein
the importance calculation unit calculates the importance level by adding the first importance level and the second importance level.

12. The information processing apparatus according to claim 11, wherein
the importance calculation unit multiplies the first importance level and the second importance level by a weight set in advance, and adds the first importance level and the second importance level each multiplied by the weight to calculate the importance level.

13. The information processing apparatus according to claim 10, wherein
the importance calculation unit divides the virtual space represented by the free viewpoint content into a plurality of regions, and calculates the first importance level for each of the plurality of regions divided.

14. The information processing apparatus according to claim 9, wherein
the information related to the free viewpoint content includes at least one of event data indicating an event that has occurred in the free viewpoint content, motion of one or more objects included in the free viewpoint content, and a viewing history of the free viewpoint content, and
the importance calculation unit calculates the importance level using at least one of the event data, the motion of the one or more objects, and the viewing history.

15. The information processing apparatus according to claim 14, wherein
the importance calculation unit calculates a third importance level based on each of at least two of the event data, the motion of the one or more objects, and the viewing history, and adds the third importance levels calculated to calculate the importance level.

16. The information processing apparatus according to claim 15, wherein
the importance calculation unit multiplies the third importance level calculated based on each of the at least two of the event data, the motion of the one or more objects, and the viewing history by a weight set for each of the event data, the motion of the one or more objects, and the viewing history, and adds the third importance levels each multiplied by the weight to calculate the importance level.

17. The information processing apparatus according to claim 1, wherein
the information related to the user includes at least one of age, sex, hobby, and preference.

18. The information processing apparatus according to claim 1, wherein
the information related to the free viewpoint content includes at least one of event data indicating an event that has occurred in the free viewpoint content, motion of one or more objects included in the free viewpoint content, a viewing history of the free viewpoint content, and meta information given to the free viewpoint content.

19. An information processing method executed by an information processing apparatus that provides a viewing service of free viewpoint content to a user terminal connected via a predetermined network, the method comprising:
acquiring at least one of information related to a user who views the free viewpoint content and information related to the free viewpoint content; and
generating a viewing time and a viewing position of the free viewpoint content based on the at least one of the information related to the user and the information related to the free viewpoint content.

20. A program for causing a processor to function, the processor being included in an information processing apparatus that provides a viewing service of free viewpoint content to a user terminal connected via a predetermined network, the program causing the processor to implement:
acquiring at least one of information related to a user who views the free viewpoint content and information related to the free viewpoint content; and
generating a viewing time and a viewing position of the free viewpoint content based on the at least one of the information related to the user and the information related to the free viewpoint content.
